# EUROPEAN PATENT APPLICATION

(11) **EP 2 612 891 A1**
(43) Date of publication of application: **10.07.2013**
(21) Application number: 11821418.8
(22) Date of filing: 30.06.2011
(51) Int. Cl.: C09D 201/00, C09D 5/00, C09D 5/24, C09D 7/12

(54) **ANTISTATIC COATING, AND STRUCTURE MADE OF COMPOSITE MATERIAL USING SAME AND PRODUCTION METHOD THEREFOR**

(30) Priority: 31.08.2010 JP 2010194927
(71) Applicant: Mitsubishi Heavy Industries, Ltd., Tokyo 108-8215 (JP)
(72) Inventor: KAMINO, Yuichiro, Tokyo 108-8215 (JP); OGURI, Kazuyuki, Tokyo 108-8215 (JP); YAMAGUCHI, Hiroaki, Tokyo 108-8215 (JP)
(74) Representative: Henkel, Breuer & Partner
(86) International application number: PCT/JP2011/065041
(87) International publication number: WO 2012/029400

(57) **Abstract**

The purpose of the present invention is to provide a coating capable of preventing electrolytic corrosion, and which is resistant to electrostatic build-up. An antistatic coating comprising an inorganic fiber containing Si, Ti or Zr, C, and O, or an Ag filler, is provided to the primer. Further, a structure made of composite material which is not susceptible to electrolytic corrosion and electrostatic build-up, is obtained as a result of the formation of a layer by coating the antistatic coating comprising an inorganic fiber that contains Si, Ti or Zr, C, and O, or comprising an Ag filler, on the surface of the structure made of composite material.

## Description

### {Technical Field}

The present invention relates to an antistatic coating, a structure made of a composite material using the antistatic coating, and a production method therefor.

### {Background Art}

Aluminum alloys and resin materials that have been reinforced with fiber (composite materials) are widely used as the materials for aircraft structures such as the main wing and the fuel tanks. Carbon fiber reinforced plastics (CFRP) prepared by immobilizing carbon fibers within an epoxy resin or the like are widely used as these composite materials.

For example, in those cases where L-shaped clips made of an aluminum alloy are fitted inside an aircraft fuel tank made of a composite material, the difference in standard electrode potential between the aluminum alloy member and the composite member causes a galvanic current to flow through the portions of contact between the composite material and the aluminum alloy, which can lead to electrochemical corrosion (galvanic corrosion) of the aluminum alloy.

In order to prevent this type of galvanic corrosion, a technique has been proposed wherein a layer of an insulator such as a glass fiber reinforced plastic (GFRP), prepared by immobilizing glass fibers within an epoxy resin or the like, is formed on the inner surface layer of the tank structure in those locations where the tank contacts internal structures formed from aluminum alloy and in the portions surrounding those contact locations.
However, if the inner surface layer of the fuel tank structure is formed from an insulator such as GFRP, then an electrical charge generated by flow electrification between the GFRP and the fuel can accumulate on the GFRP. As a result, the danger of an electrostatic discharge acting as an ignition source for the fuel cannot be ignored.

Further, in order to prevent galvanic corrosion, a primer is also applied across the entire contact surfaces of both members. This primer is composed mainly of resin, and generally has insulating properties. Accordingly, those members that have been coated with the primer inside the fuel tank can develop an electrostatic charge through friction or the like, and there is a danger that this electrostatic charge may cause a spark that results in an explosion.

In order to address this problem, Patent Literature 1 (PTL 1) discloses a method of dissipating static electricity by periodically providing partial unprimed areas on the members inside the fuel tank.

### {Citation List}

### {Patent Literature}

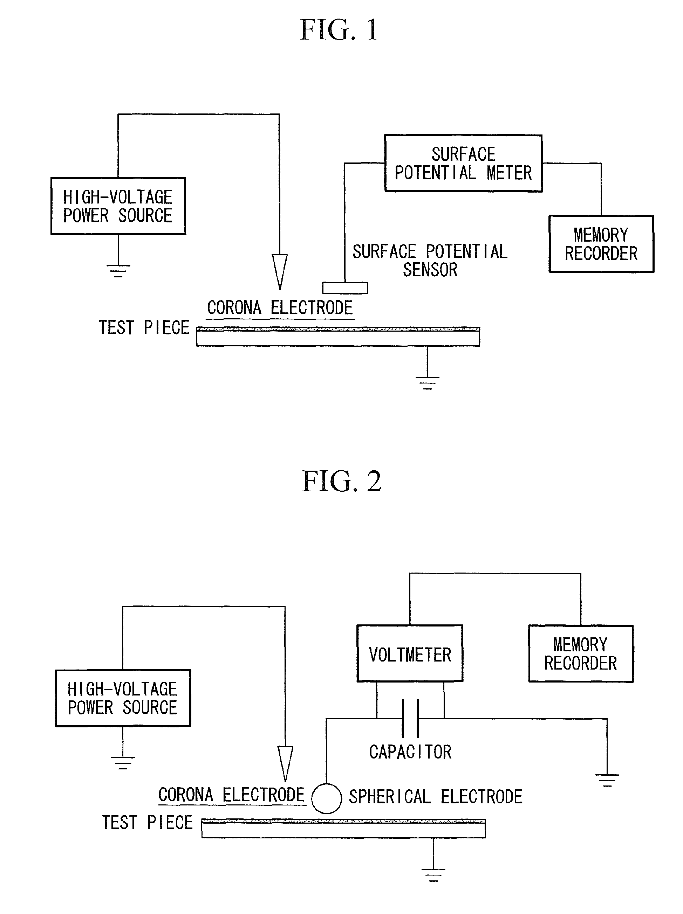

{PTL 1} U.S. Patent Application, Publication No. 2008/0308678 (paragraphs [0022] and [0023], and Fig. 1)

### {Summary of Invention}

### {Technical Problem}

The present invention has been developed in light of the types of circumstances outlined above, and has an object of providing a coating material that can prevent galvanic corrosion, and is resistant to electrostatic charging even when there are no restrictions on the areas to which the coating material may be applied.

### {Solution to Problem}

In order to achieve the above object, the present invention provides an antistatic coating comprising a primer containing either an inorganic fiber comprising Si, Ti or Zr, C, and O, or an Ag filler.

According to the present invention, by incorporating an inorganic fiber comprising Si, Ti or Zr, C, and O (namely, an Si-Ti-(or Zr)-C-O-based inorganic fiber), or an Ag filler within a resin, a coating material can be obtained that combines an anticorrosive function and an antistatic function.

In one aspect of the invention described above, when an Si-Ti-(or Zr)-C-O-based inorganic fiber is incorporated within the primer, the amount of the Si-Ti-(or Zr)-C-O-based inorganic fiber is preferably not less than 0.1% by mass and not more than 5% by mass. By incorporating the Si-Ti-(or Zr)-C-O-based inorganic fiber in the primer, the transferred charge of a layer formed from the antistatic coating can be reduced. Further, by incorporating not more than 5% by mass of the Si-Ti-(or Zr)-C-O-based inorganic fiber in the primer, the anticorrosive function can be further enhanced.

In another aspect of the invention described above, when an Ag filler is incorporated within the primer, the amount of the Ag filler is preferably not less than 0.005% by mass and not more than 0.5% by mass. By incorporating the Ag filler in the primer, the transferred charge of a layer formed from the antistatic coating can be reduced. Further, by incorporating not more than 0.5% by mass of the Ag filler in the primer, the anticorrosive function can be further enhanced.

The antistatic coating described above is applied to the surface of a structure made of a composite material to form a layer. This enables production of a structure made of a composite material that is resistant to galvanic corrosion and electrostatic charging and the like.

### {Advantageous Effects of Invention}

By incorporating an appropriate amount of an appropriate type of conductive material within a primer, an antistatic coating that combines an anticorrosive function and an antistatic function can be obtained.

### {Brief Description of Drawings}

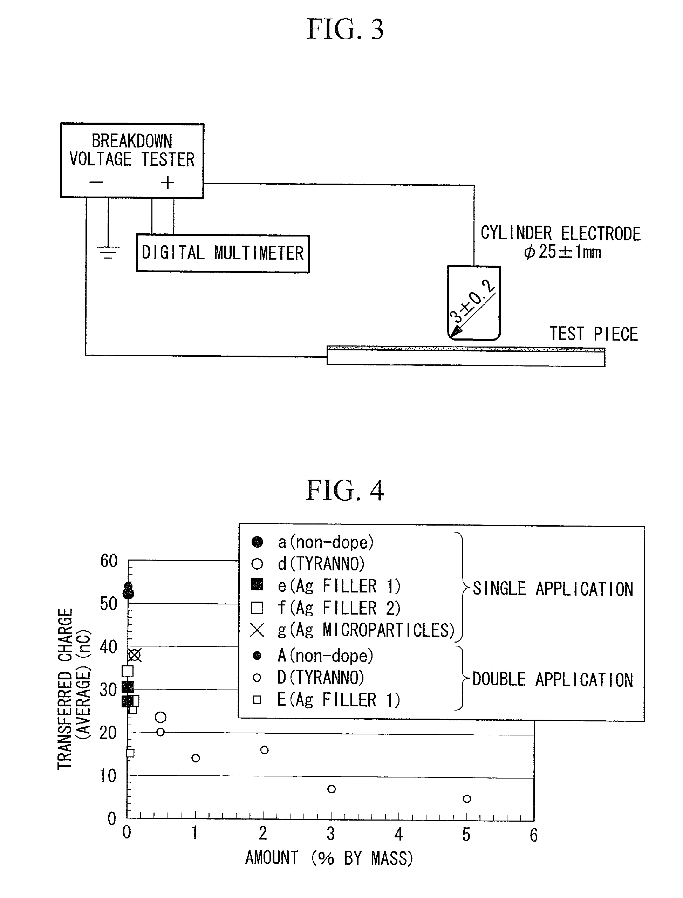

{Fig. 1} A schematic illustration of a surface potential measuring device.
{Fig. 2} A schematic illustration of a transferred charge measuring device.
{Fig. 3} A schematic illustration of a breakdown voltage measuring device.
{Fig. 4} A diagram illustrating the transferred charge values of test pieces coated once with various coating materials, and test pieces coated twice with various coating materials.

### {Description of Embodiments}

Embodiments of the antistatic coating according to the present invention are described below with reference to the drawings.
The antistatic coating according to these embodiments comprises a primer containing either an inorganic fiber comprising Si, Ti or Zr, C, and O (namely, an Si-Ti-(or Zr)-CO-based inorganic fiber), or an Ag filler.

Materials that can be applied to carbon fiber reinforced plastics (CFRP) and aluminum alloys (Al) and the like are used as the primer. For example, the two-pot epoxy resin 454-4-1 available from ANAC (AkzoNobel Aerospace Coatings) can be used as the primer.

The Si-Ti-(or Zr)-C-O-based inorganic fiber has a specific resistance of 10⁶ Ω·cm to 10⁻¹ Ω·cm. In the Si-Ti-(or Zr)-C-O-based inorganic fiber, the diameter of the smallest unit fiber (filament) that constitutes the inorganic fiber is within a range from 5 µm to 20 µm. The Si-Ti-(or Zr)-C-O-based inorganic fiber may be composed of a bundle of filaments.
Tyranno fiber (a registered trademark, manufactured by Ube Industries, Ltd.) or the like can be used as the Si-Ti-(or Zr)-C-O-based inorganic fiber. The inorganic fiber is preferably in a chopped form in which the fibers have been cut in the length direction. For example, chopped fibers prepared by cutting a continuous fiber to lengths of 0.5 mm can be used. This chopped fiber typically has a filament diameter of approximately 8.5 µm, a fiber bundle diameter of approximately 27 µm, and a specific resistance of 10⁻¹ Ω·cm (±10%).

The Ag filler is composed of Ag nanofibers having a length of several µm to 200 µm and a diameter of 10 nm to 500 nm, or silver (Ag) microparticles (having a diameter of 0.1 µm to 5 µm). When the diameter is small, the Ag filler is preferably composed of particles having an elongated shape. Specifically, if the length is constant, then if the diameter of the Ag filler is 1/4, the mass is 1/16. In other words, provided the Ag filler is an elongated shape, conductivity can be achieved (a network can be formed) even if the amount of the filler is reduced.
One example of a material that can be used as the Ag filler is NGAP NF Ag-3101 (length: 20 µm, diameter: 100 nm), which is available from Nanogap. Another example of a material that can be used as the Ag filler is Nano silver wire (diameter: 20 nm to 30 nm, length: several µm) available from Fujifilm Holdings Corporation.

The antistatic coating according to the present embodiment is prepared by adding a prescribed amount of the Si-Ti-(or Zr)-C-O-based inorganic fiber or the Ag filler to the primer, and then performing appropriate mixing. The prescribed amount is preferably set by providing a threshold for the transferred charge when a layer is formed by applying the antistatic coating, and then determining the prescribed amount so that the transferred charge upon formation of a layer of the coating material is less than the threshold. The prescribed amount in the case where an Si-Ti-(or Zr)-C-O-based inorganic fiber is added is preferably not less than 0.1% by mass and not more than 5% by mass. The prescribed amount in the case where an Ag filler is added is preferably not less than 0.005% by mass and not more than 0.5% by mass.
In an antistatic coating prepared by adding an Si-Ti-(or Zr)-C-O-based inorganic fiber to a primer and performing mixing, there is a possibility that the bundle of the Si-Ti-(or Zr)-C-O-based inorganic fiber may separate into filaments, or even in those cases where the mechanical mixing does not cause separation down to filament units, there is a possibility that portions of the fiber may separate, causing a shortening of the fiber length. In other words, there is a possibility that the coating material may include a mixture of fibers having a size anywhere between the filament diameter and the inorganic fiber bundle diameter of the inorganic fiber prior to mixing with the primer, and having an arbitrary length that is any length equal to or shorter than the fiber length prior to mixing with the primer.

The antistatic coating prepared in the manner described above is applied to the surface of structure using a spraying method or the like. The material of the structure may be a composite material such as CFRP or an aluminum alloy or the like, but a composite material is preferred. Factors such as the size of the spray outlet of the gun used for spraying the antistatic coating may be set appropriately with due consideration of the properties of the primer and the amount added of the Si-Ti-(or Zr)-C-O-based inorganic fiber or the Ag filler.
If the thickness of the layer formed from the antistatic coating is too thick, then the breakdown voltage tends to increase. Accordingly, the thickness of the layer formed from the antistatic coating is preferably set appropriately in accordance with the variety of the coating material. When 454-4-1 is used as the primer, curing is preferably performed after one, two or three applications of the 454-4-1. In this case, the layer is formed with a thickness of 8 µm to approximately 40 or 65 µm.

### {Examples}

### (Preparation of Coating Materials)

Using 454-4-1 as the resin (primer), coating materials containing various conductive materials were prepared.

### (1) Coating Material A

A coating material A was prepared by adding a curing solution CA-109 to 454-4-1 in a ratio (volumetric ratio) of 3:1, and then performing thorough mechanical mixing. A conductive material was not added to the primer.

### (2) Coating Material B

Al-doped ZnO microparticles (such as Pazet CK, manufactured by HakuseuiTech Co., Ltd.) were used as the conductive material.
The coating material B was prepared by adding a prescribed amount of the above conductive material to the coating material A, and performing mechanical mixing. Coating material B₁ and coating material B₃ were prepared by adding 1% by mass and 3% by mass respectively of the conductive material to the coating material A (100% by mass).

### (3) Coating Material C

Ga-doped ZnO microparticles (such as Pazet GK-40, manufactured by HakuseuiTech Co., Ltd.) were used as the conductive material.
The coating material C was prepared by adding a prescribed amount of the above conductive material to the coating material A, and performing mechanical mixing. Coating material C₁ and coating material C₃ were prepared by adding 1% by mass and 3% by mass respectively of the conductive material to the coating material A (100% by mass).

### (4) Coating Material D

Chopped Tyranno fiber (H-grade, filament diameter 0.5 mm x length 5 mm, specific resistance: 10⁻¹ Ω·cm) was used as the conductive material.
The coating material D was prepared by adding a prescribed amount of the above conductive material to the coating material A, and performing mechanical mixing. Coating material D_{0.1}, coating material D_{0.5}, coating material D₁, coating material D₂, coating material D₃ and coating material D₅ were prepared by adding 0.1% by mass, 0.5% by mass, 1% by mass, 2% by mass, 3% by mass and 5% by mass respectively of the conductive material to the coating material A (100% by mass).

### (5) Coating Material E

An Ag filler 1 (diameter: 100 nm to 300 nm, length: several µm to several tens of µm, manufactured by Nanogap) was used as the conductive material.
The coating material E was prepared by adding a prescribed amount of the above conductive material to the coating material A, and performing mechanical mixing. Coating material E_{0.05}, coating material E_{0.01} and coating material E_{0.1} were prepared by adding 0.05% by mass, 0.01% by mass and 0.1% by mass respectively of the conductive material to the coating material A (100% by mass).

### (6) Coating Material F

An Ag filler 2 (diameter: 20 nm to 30 nm, length: several µm, manufactured by FujiFilm) was used as the conductive material.
The coating material F was prepared by adding a prescribed amount of the above conductive material to the coating material A, and performing mechanical mixing. Coating material F_{0.005} and coating material F_{0.01} were prepared by adding 0.005% by mass and 0.01% by mass respectively of the conductive material to the coating material A (100% by mass).

### (7) Coating Material G

Ag microparticles (average particle diameter: 0.46 µm, manufactured by Fukuda Metal Foil & Powder) was used as the conductive material.
The coating material G was prepared by adding a prescribed amount of the above conductive material to the coating material A, and performing mechanical mixing. A coating material G_{0.1} was prepared by adding 0.1% by mass of the conductive material to the coating material A (100% by mass).

### (Preparation of Test Pieces)

An aluminum alloy (Al) or a carbon fiber reinforced plastic (CFRP) was used as the substrate.

### (1) Double application of coating material

Each of the coating materials A to E was applied twice to three separate substrates, and the coating materials were then cured appropriately to prepare three of each of test pieces A to E. When a CFRP is used for a fuel tank, the bag surface of the CFRP is generally disposed on the inside of the fuel tank. Considering this fact, when CFPR was used as the substrate, the coating materials A to E were applied to the bag surface of the CFRP.

### (2) Single application of coating material

The coating material A and the coating materials D to G were each applied once to a substrate, and the coating materials were then cured appropriately to prepare a test piece a and test pieces d to g. Three of each of the test pieces a and d to g were prepared. When a CFPR was used as the substrate, the coating material a and the coating materials d to g were applied to the bag surface of the CFRP.

### (Surface Roughness and Thickness)

When preparing the test pieces described above, each of the coating materials was also applied to a slide glass, thus preparing identification test pieces A to E, an identification test piece a, and identification test pieces d to g.
The surface roughness (Ra) of each of the test pieces prepared using CFRP as the substrate was measured with a contact-type surface roughness meter using the corresponding identification test piece.
The thickness of the layer formed from the coating material in each of the test pieces prepared using CFRP as the substrate was measured by cross-sectional observation using the identification test pieces A to E, the identification test piece a, and the identification test pieces d to g.

### (Volume Resistivity)

The volume resistivity of each of the test pieces prepared using CFRP as the substrate was measured using a digital ultra high resistance meter. The upper measurement limit for the resistivity value was 10×10¹⁵ Ω·cm.

### (Surface Potential)

Measurement of the surface potential using each of the test pieces is described below. Fig. 1 is a schematic illustration of a surface potential measuring device. A device SK-200 manufactured by Keyence Corporation was used as the surface potential meter.
The test piece was charged by irradiation with a negative charge from a corona electrode, and the surface potential meter was used to acquire the initial surface potential of the test piece. At this time, measurement of the surface potential was performed at least three times. The separation distance between the corona electrode and the test piece was 3 cm, the power source voltage was 20 kV, and the irradiation time was 20 seconds. Measurement of the surface potential was performed under an atmosphere at an air temperature of 19.5°C and a humidity of 33% RH in the case of the test pieces prepared using a single application of the coating material, and under an atmosphere at an air temperature of 22°C to 26°C and a humidity of 33% RH to 45% RH in the case of the test pieces prepared using a double application of the coating material.

### (Transferred charge)

Measurement of the transferred charge using each of the test pieces is described below. Fig. 2 is a schematic illustration of a transferred charge measuring device'. A device R8240 or R8252 manufactured by Advantest Corporation was used as the voltmeter (electrometer).
The test piece was charged by irradiation with a negative charge from a corona electrode, a grounded spherical electrode was moved gradually closer to the test piece until a discharge occurred, and the electrical charge that accumulated in a capacitor was measured. At this time, 10 data values were acquired for the transferred charge. The separation distance between the corona electrode and the test piece was 3 cm, the power source voltage was 30 kV, and in terms of the irradiation time, 20 seconds was sufficient to achieve a saturated transferred charge, and therefore the irradiation time was set to 20 seconds. However, for the test piece a and the test pieces d to g, the current increased and the power source voltage could not be set to 30 kV, and therefore a power source voltage within a range from 25 kV to 30 kV was permitted. Measurement of the transferred charge was performed under an atmosphere at an air temperature of 20.0°C and a humidity of 35% RH in the case of the test pieces prepared using a single application of the coating material, and under an atmosphere at an air temperature of 23.5°C and a humidity of 29% RH in the case of the test pieces prepared using a double application of the coating material.

### (Measurement of Breakdown Voltage)

Measurement of the breakdown voltage using each of the test pieces is described below. Fig. 3 is a schematic illustration of a breakdown voltage measuring device. A device TOS8700 manufactured by Kikusui Electronics Corp. was used as the breakdown tester, and a meter 7555 manufactured by Kikusui Electronics Corp. was used as a digital multimeter.
A high voltage was applied to the test piece using the breakdown tester, and the breakdown voltage was measured. The criterion used for determining breakdown was a current increase (with the breakdown tester shutting off at 5 mA). Measurement of the breakdown voltage was performed under an atmosphere at an air temperature of 21.5°C and a humidity of 37% RH.

The test results for the test pieces prepared using a single application of the coating material to the substrate are shown in Table 1. For the transferred charge, the maximum value and the average value of the 10 acquired data values are displayed.

**{Table 1}**

| Test piece | Coating material | | Surface roughness (Ra) | Thickness (µm) | Surface potential (kV) | | Transferred charge (nC) | | | | Breakdown voltage (kV) | |
|---|---|---|---|---|---|---|---|---|---|---|---|---|
| | Conductive material | Amount added (% by mass) | | | Al | CFRP | Al | | CFRP | | Al | CFRP |
| | | | | | | | Max. | Ave. | Max. | Ave. | | |
| a | - | - | 0.97 | 22 | 0.92 | 3.76 | 4 | 1 | 48 | 29 | 0.8 | 3.4 |
| d_{0.1} | Tyranno fiber | 0.1 | 1.13 | 22 | 1.13 | 3.40 | 5 | 3 | 28 | 21 | 0.6 | 2.8 |
| d_{0.5} | Tyranno fiber | 0.5 | 1.35 | 21 | 1.21 | 2.60 | 5 | 3 | 17 | 13 | 0.3 | 1.9 |
| e_{0.01} | Ag filler 1 | 0.01 | 1.01 | 18 | 1.06 | 2.97 | 6 | 3 | 37 | 19 | 0.6 | 1.8 |
| e_{0.05} | Ag filler 1 | 0.05 | 1.02 | 18 | 0.87 | 2.72 | 4 | 2 | 20 | 15 | 0.5 | 1.4 |
| f_{0.005} | Ag filler 2 | 0.005 | 0.98 | 19 | 0.84 | 2.75 | 4 | 2 | 24 | 17 | 0.5 | 1.6 |
| f_{0.01} | Ag filler 2 | 0.01 | 0.99 | 19 | 0.86 | 2.63 | 4 | 2 | 19 | 15 | 0.5 | 1.2 |
| g_{0.1} | Ag microparticles | 0.1 | 0.2 | 23 | 1.24 | 3.44 | 10 | 6 | 31 | 21 | 0.9 | 3.2 |

The surface roughness values Ra of the test piece e and the test piece f containing the Ag fillers were similar to the value observed for the test piece a containing no conductive material. The surface roughness values Ra of the test piece d containing Tyranno fiber and the test piece g containing Ag microparticles were slightly higher than the surface roughness value Ra observed for the test piece a.

In the test piece a and the test pieces e to g, the thickness values for the layers formed from the coating material A and the coating materials E to G respectively were each within a range from 18 µm to 23 µm.

The volume resistivity values of the test piece a and the test pieces e to g all yielded results exceeding the upper measurement limit (10¹⁵ Ω·cm).

For test pieces that used the same coating material, the test piece prepared using CFRP as the substrate exhibited larger values for the surface charge and the transferred charge than the test piece prepared using Al as the substrate.

From Table 1 it is evident that, with the exception of a portion of the test pieces prepared using Al as the substrate, the surface potential of the test pieces d to g that contained a conductive material was lower than of the test piece a. The breakdown voltage of each of the test pieces e to g prepared using CFRP as the substrate was lower than the breakdown voltage of the test piece a. Further, the transferred charge for the test pieces prepared using CFRP as the substrate decreased as a result of adding a conductive material.

The above results confirmed that when a coating material containing Tyranno fiber is applied to a substrate made of a composite material, by adding the Tyranno fiber to the primer in an amount of 0.1% by mass to 0.5% by mass, the transferred charge is able to be suppressed. Furthermore, the results also confirmed that when a coating material containing an Ag filler is applied to a substrate made from a composite material, by adding the Ag filler to the primer in an amount of 0.005% by mass to 0.05% by mass, the transferred charge is able to be suppressed. The Ag filler may also be composed of 0.1% by mass of Ag microparticles, but an Ag filler having an elongated shape such as a wire enables the transferred charge to be suppressed with a smaller amount of the filler.

The test results for the test pieces A to E are shown in Table 2. For the transferred charge, the maximum value and the average value of the 10 acquired data values are displayed.

**{Table 2}**

| Test piece | Coating material | | Surface roughness (Ra) | Thickness (µm) | Surface potential (kV) | | Transferred charge (nC) | | | |
|---|---|---|---|---|---|---|---|---|---|---|
| | Conductive material | Amount added (% by mass) | | | Al | CFRP | Al | | CFRP | |
| | | | | | | | Max. | Ave. | Max. | Ave. |
| A | - | - | 0.62 | 35 | 1.3 | 2.6 | 5 | 3 | 74 | 54 |
| B₁ | Al-doped ZnO | 1 | 0.65 | 38 | 1.6 | 2.9 | 10 | 8 | 73 | 58 |
| B₃ | Al-doped ZnO | 3 | 0.71 | 39 | 1.3 | 2.9 | 5 | 4 | 73 | 52 |
| C₁ | Ga-doped ZnO | 1 | 0.68 | 36 | 1.2 | 2.7 | 8 | 6 | 60 | 49 |
| C₃ | Ga-doped ZnO | 3 | 0.76 | 38 | 1.3 | 2.7 | 10 | 6 | 72 | 50 |
| D_{0.5} | Tyranno fiber | 0.5 | 1.22 | 38 | 1.6 | 2.0 | 11 | 9 | 32 | 20 |
| D₁ | Tyranno fiber | 1 | 1.34 | 39 | 1.3 | 1.7 | 11 | 8 | 22 | 14 |
| D₂ | Tyranno fiber | 2 | 1.37 | 37 | 1.2 | 1.5 | 14 | 9 | 23 | 16 |
| D₃ | Tyranno fiber | 3 | 1.38 | 38 | 0.9 | 1.3 | 4 | 3 | 9 | 7 |
| D₅ | Tyranno fiber | 5 | 1.51 | 40 | 0.7 | 1.2 | 2 | 1 | 10 | 5 |
| E_{0.05} | Ag filler 1 | 0.05 | 0.78 | 35 | 1.0 | 1.9 | 6 | 5 | 20 | 15 |
| E_{0.1} | Ag filler 1 | 0.1 | 0.8 | 35 | 1.0 | 1.6 | 7 | 5 | 33 | 25 |

The surface roughness values Ra of the test piece B, the test piece C and the test piece E were equal to or slightly higher than that of the test piece A. The surface roughness Ra of the test piece D was approximately 2 to 2.5 times that of the surface roughness Ra of the test piece A.

In the test pieces A to E, the thickness values for the layers formed from the coating materials A to E respectively were each within a range from 35 µm to 40 µm.

In the test piece D that was prepared by applying the coating material D containing Tyranno fiber, the volume resistivity decreased as the amount of Tyranno fiber was increased. Specifically, in the test piece D_{0.5} and the test piece D₁, the volume resistivity was too high, and could not be measured. For the test pieces D₂, D₃ and D₅, the volume resistivity values were 1.6×10¹⁴ Ω·cm, 1.0×10¹³ Ω·cm and 2.0×10¹² Ω·cm respectively. For the test pieces A to C and the test piece E, the results exceeded the upper measurement limit for the volume resistivity.
For test pieces that used the same coating material, the test piece prepared using CFRP as the substrate exhibited larger values for the surface charge and the transferred charge than the test piece prepared using Al as the substrate.

From Table 2 it is evident that for the test piece B and the test piece C, which were prepared by applying the coating material B containing Al-doped ZnO and the coating material C containing Ga-doped ZnO respectively as the conductive material to CFRP, regardless of the amount added of the conductive material, there was no significant difference in the surface potential compared with that of the test piece A prepared by applying the coating material A containing no conductive material. Further, with the exception of a portion of the results in which Al was used as the substrate, the surface potential results for the test piece D prepared by applying the coating material D containing Tyranno fiber and the test piece E prepared by applying the coating material E containing an Ag filler were each lower than the result observed for the test piece A. Furthermore, the surface potential of the test piece D decreased as the amount of Tyranno fiber was increased. A lower surface potential is preferred.

In gas and vapor classifications made in accordance with the minimum ignition current prescribed in IEC/EN 60079-0, for example in BS13463-1, a threshold value is recorded for the transferred charge of an insulator. According to this classification, the threshold for the transferred charge of an insulator in a fuel environment is 60 nC. According to Table 2, the transferred charge values for the test pieces A, B and C all exceeded this threshold. In contrast, the transferred charge values for the test pieces D and E were only approximately half of the threshold. Increasing the thickness of the layer formed from the coating material A to E facilitates charging. Based on the above results, even in those cases where a coating material containing Tyranno fiber is applied twice to a substrate made of a composite material, provided the Tyranno fiber is added to the primer in an amount of not less than 0.5% by mass and not more than 5% by mass, the resulting transferred charge is lower than the above threshold. Similarly, based on the above results, in those cases where a coating material containing an Ag filler is applied twice to a substrate made of a composite material, provided the silver filler is added to the primer in an amount of not less than 0.05% by mass and not more than 0.1% by mass, the resulting transferred charge is lower than the above threshold.

Fig. 4 is a diagram summarizing the transferred charge values of test pieces coated once with various coating materials, and test pieces coated twice with various coating materials. In this figure, the horizontal axis represents the amount of the conductive material, and the vertical axis represents the average value for the transferred charge. In Fig. 4, the thickness of the layer formed by double application of the coating material was defined as being 1.8 times the thickness of the layer formed by single application, and based on the assumption that the transferred charge is proportional to the thickness of the layer, the transferred charge for the layer formed by double application was recorded as 1.8 times the transferred charge of the test piece prepared by single application of the coating material.
Fig. 4 confirmed that, regardless of the number of applications of the coating material, the transferred charge was able to be reduced by adding a conductive material. Further, the transferred charge tended to decrease as the amount of the conductive material was increased.

Based on the above results, it was evident that applying a coating material prepared by adding Tyranno fiber or an Ag filler to a primer yielded an antistatic effect. Further, it was also confirmed that the desired antistatic effect could not be obtained by simply adding a conductive material to a primer, but rather it was necessary to duly consider the variety and amount of the conductive material.
By adding Tyranno fiber in an amount of not less than 0.1% by mass and not more than 5% by mass, the transferred charge was also able to be reduced, and a satisfactory anticorrosive function was also achieved. Based on these results, it is clear that a coating material having a superior antistatic effect can be obtained by adding Tyranno fiber in an amount of not less than 0.1% by mass and not more than 5% by mass.
By adding an Ag filler in an amount of not less than 0.005% by mass and not more than 0.5% by mass, the transferred charge was also able to be reduced, and a satisfactory anticorrosive function was also achieved. Based on these results, it is clear that a coating material having a superior antistatic effect can be obtained by adding an Ag filler in an amount of not less than 0.005% by mass and not more than 0.1% by mass. Furthermore, reducing the amount of the conductive material provides secondary benefits, including suppression of any weight increase, minimization of production costs, and suppression of any deterioration in material resistance properties.

The upper limit for the volume resistivity of electrostatic diffusion materials used for antistatic purposes generally is generally in the order of 10¹⁰ Ω·cm to 10¹¹ Ω·cm. However, as the volume resistivity is reduced, corrosion is more likely to occur. Accordingly, in order to prevent electrostatic charging while also preventing corrosion, sufficient conductive material must be added to ensure that the volume resistivity is not reduced too much, while also ensuring that an electrostatic discharge capable of igniting the fuel cannot occur.

Further, by reducing the amount of the conductive material, any variation in the properties of the primer itself can be minimized, which is desirable. For example, properties that are required for fuel tank primers include good adhesion to the substrate and good adhesion to sealants, as well as superior solvent resistance and flame retardancy. Accordingly, the conductive material is preferably added in an amount that yields the desired antistatic effect while still retaining the desired properties.

Salt spray tests were performed using the test pieces A to E, and the level of galvanic corrosion was evaluated. A 5% by mass solution of salt water was sprayed onto the test pieces A to E, and the test pieces were left to stand at room temperature and inspected visually.
Even 2 weeks after spraying with salt water, the test pieces A to E exhibited no change in external appearance.

## Claims

1. An antistatic coating, comprising a primer containing either
an inorganic fiber comprising Si, Ti or Zr, C, and O, or an Ag filler.

2. The antistatic coating according to claim 1, wherein an amount of the inorganic fiber comprising Si, Ti or Zr, C, and O is not less than 0.1% by mass and not more than 5% by mass.

3. The antistatic coating according to claim 1, wherein an amount of the Ag filler is not less than 0.005% by mass and not more than 0.5% by mass.

4. A structure made of a composite material, having a layer formed from the antistatic coating according to any one of claims 1 to 3 on a surface of the structure.

5. A production method for a structure made of a composite material, the method comprising a step of applying the antistatic coating according to any one of claims 1 to 3 to a surface of the structure to form a layer.
